# EUROPEAN PATENT APPLICATION

(11) **EP 4 560 415 A1**
(43) Date of publication of application: **28.05.2025**
(21) Application number: 22951964.0
(22) Date of filing: 21.07.2022
(51) Int. Cl.: G05B 9/03, G21D 3/04

(54) **SAFETY PROTECTION SYSTEM AND TEST METHOD**

(71) Applicant: MITSUBISHI ELECTRIC CORPORATION, Chiyoda-ku Tokyo 100-8310 (JP)
(72) Inventor: OKUDA, Susumu, Tokyo 100-8310 (JP)
(74) Representative: Mewburn Ellis LLP
(86) International application number: PCT/JP2022/028305
(87) International publication number: WO 2024/018578

(57) **Abstract**

A safety protection system (1000) includes: a safety protection device (1) which outputs an operation request signal to plant equipment (4), for safety protection of a plant; a backup device (2) which backs up the safety protection device; and a signal output circuit (3) which unifies the output of the safety protection device and an output of the backup device, and outputs the operation request signal to the plant equipment so that the plant equipment operates to a safe side. Output signals that the backup device outputs are provided in a duplexed manner. The signal output circuit outputs the operation request signal only when both of the duplexed output signals of the backup device are ON, and circuit soundness can be tested in a state in which the operation request signal to the plant equipment is blocked by the output signals each being turned ON one by one. Thus, the number of unnecessary operations of the plant equipment performed in each test is decreased.

## Description

### TECHNICAL FIELD

The present disclosure relates to a safety protection system which outputs an operation request signal to plant equipment, for safety protection of a plant, and a test method therefor.

### BACKGROUND ART

In a case where abnormality has occurred in a nuclear power plant, the plant is controlled into a safe state by a safety protection device. Therefore, the safety protection device has a sufficiently multiplexed configuration so as to have high reliability. However, it is necessary to consider a case where the safety protection device does not normally operate when abnormality has occurred in the plant because of common factor failure between multiplexed devices due to software error or the like.

In order to control the plant into a safe state in a case where common factor failure of the safety protection device is assumed, a backup device to which equipment and a design different from those of the safety protection device are applied so as not to be influenced by common factor failure of the safety protection device, is provided.

Patent Document 1 shows a safety protection system including a signal output circuit which receives output signals from both of a backup device and a safety protection device and outputs a predetermined safety-side operation signal when the output signals from the two devices do not coincide with each other.

### CITATION LIST

### PATENT DOCUMENT

Patent Document 1: Japanese Patent No. 5675256

### SUMMARY OF THE INVENTION

### PROBLEM TO BE SOLVED BY THE INVENTION

It is required that devices composing a safety protection system of a nuclear power plant can be regularly confirmed about whether their functions have not been lost. A function implemented by software can be confirmed by a self-diagnosis function of a digital control device, but a function implemented by hardware needs to be confirmed by being actually operated.

The signal output circuit disclosed in Patent Document 1 is a common circuit between the safety protection device and the backup device in the safety protection system, and has a circuit implemented by hardware. Therefore, in order to confirm that the function of the signal output circuit is sound, it is necessary to perform a total of three test operations for plant equipment, i.e., an operation by an operation request signal from a safety-protection-side device, an operation by an operation request signal from the backup device, and an operation for confirming a priority logic.

The present disclosure has been made to solve the above problem, and an object of the present disclosure is to provide a safety protection system that makes it possible to test soundness of a signal output circuit which is a common circuit between a safety protection device and a backup device in the safety protection system while minimizing the number of times of operation of plant equipment.

### MEANS TO SOLVE THE PROBLEM

A safety protection system according to the present disclosure includes: a safety protection device which outputs an operation request signal to plant equipment, for safety protection of a plant; a backup device which backs up an output of the safety protection device when the safety protection device has failed; and a signal output circuit which unifies the output of the safety protection device and an output of the backup device, and outputs the operation request signal to the plant equipment so that the plant equipment operates to a safe side. Output signals that the backup device outputs are provided in a duplexed manner. The signal output circuit outputs the operation request signal only when both of the duplexed output signals of the backup device are ON, and circuit soundness is tested in a state in which the operation request signal to the plant equipment is blocked by the output signals each being turned ON one by one.

### EFFECT OF THE INVENTION

According to the present disclosure, since the output signals from the backup device are duplexed, it becomes possible to test the output signal circuit in a state in which only one of the output signals from the backup device is turned ON so that the operation request signal to the plant equipment is blocked. Thus, it becomes possible to test soundness of the signal output circuit which is a common circuit between the safety protection device and the backup device in the safety protection system while minimizing the number of times of operation of plant equipment.

### BRIEF DESCRIPTION OF THE DRAWINGS

[FIG. 1] FIG. 1 shows the entire configuration of a safety protection system according to embodiment 1.
[FIG. 2] FIG. 2 is a flowchart showing a test procedure for a signal output circuit in the safety protection system according to embodiment 1.
[FIG. 3] FIG. 3 shows the entire configuration of a safety protection system according to embodiment 2.
[FIG. 4] FIG. 4 is a flowchart showing a test procedure for a signal output circuit in the safety protection system according to embodiment 2.

### DESCRIPTION OF EMBODIMENTS

### Embodiment 1

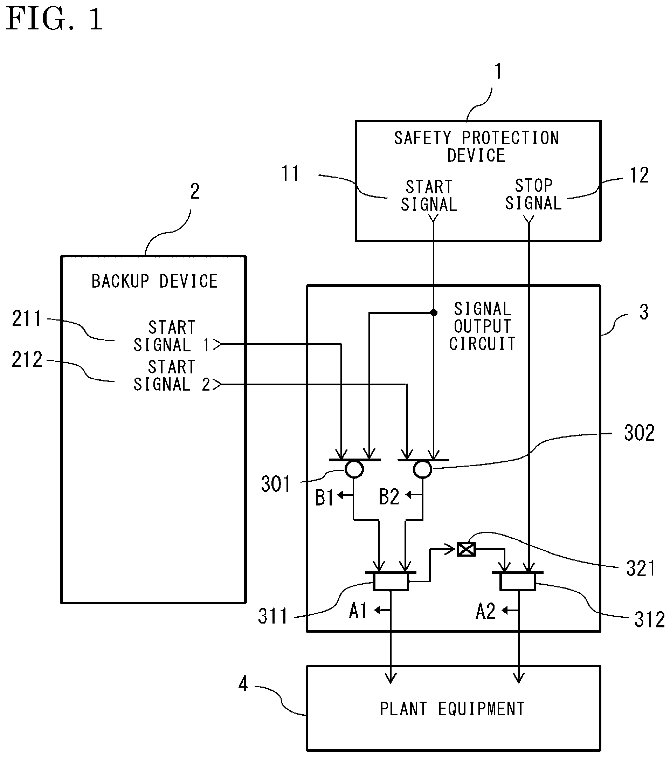

FIG. 1 shows the entire configuration of a safety protection system according to embodiment 1 of the present disclosure. In a case where abnormality has occurred in a nuclear power plant, a safety protection system 1000 outputs a start signal and a stop signal as operation request signals to plant equipment needed for safely stopping the entire plant.

In a case where abnormality has occurred in the nuclear power plant, for leading the plant into a safe state, a safety protection device 1 outputs operation request signals such as a start signal 11 and a stop signal 12, to plant equipment 4 such as various pumps and valves for controlling processes for a flow rate, a pressure, a water level, and the like of a nuclear power plant system. The operation request signals outputted from the safety protection device 1 are transmitted through a signal output circuit 3 to the plant equipment 4. By operating the plant equipment 4, the plant is led into a safe state.

In preparation for a case where the safety protection device 1 cannot perform output due to some failure such as software error when abnormality has occurred in the plant, the safety protection system 1000 is provided with a backup device 2 formed by hardware or the like. As with the safety protection device 1, the backup device 2 outputs a first start signal 211 and a second start signal 212 for the plant equipment 4, and the outputted signals are transmitted through the signal output circuit 3 to the plant equipment 4.

These signals are digital signals indicating ON or OFF states, and are inputted as digital signals to an OR circuit, an AND circuit, and a NOT circuit which are logic circuits described later, and the logic circuits output digital signals of ON or OFF states. A case where a digital signal in an ON state is outputted may be described as an expression "a signal is outputted" or "a signal is transmitted". When a signal is in an ON state, it may be described that "a signal is present", and when a signal is in an OFF state, it may be described that "a signal is absent".

The signal output circuit 3 includes a first OR circuit 301 which receives the first start signal 211 outputted from the backup device 2 and the start signal 11 outputted from the safety protection device 1, and a second OR circuit 302 which receives the second start signal 212 outputted from the backup device 2 and the start signal 11 outputted from the safety protection device 1.

Output signals from the first OR circuit 301 and the second OR circuit 302 are inputted to a first AND circuit 311, and an output signal from the first AND circuit 311 is transmitted as a start signal to the plant equipment 4.

With this circuit configuration, when the start signal 11 from the safety protection device 1 is turned ON (signal is present), an output signal is transmitted as a start signal to the plant equipment 4. Even if the start signal 11 from the safety protection device 1 is OFF (signal is absent), when the first start signal 211 and the second start signal 212 which are start signals from the backup device 2 are both ON, an output signal is transmitted as a start signal to the plant equipment 4.

Similarly, the signal output circuit 3 includes a second AND circuit 312 which receives the stop signal 12 outputted from the safety protection device 1. In addition, the second AND circuit 312 receives an output signal from a NOT circuit 321 to which the output signal from the first AND circuit 311 is inputted. An output signal from the second AND circuit 312 is transmitted as a stop signal to the plant equipment 4.

With this circuit configuration, when the start signal to the plant equipment 4 is ON, even if the stop signal 12 from the safety protection device 1 is ON, a stop signal is not transmitted to the plant equipment 4, and a start signal to the plant equipment 4 is prioritized. Such a circuit configuration is referred to as a priority circuit, and here, the priority circuit is a start signal prioritizing type.

With the signal output circuit 3 configured as described above, it is possible to start the plant equipment 4 from both of the safety protection device 1 and the backup device 2, and in a case where the safety protection device 1 and the backup device 2 transmit different operation request signals (one of them is a stop signal and the other is a start signal), the start signal can be preferentially transmitted to the plant equipment 4.

That is, the safety protection system 1000 includes the signal output circuit 3 which unifies operation request signals outputted from the safety protection device 1 and the backup device 2, and outputs the operation request signal to the plant equipment 4 so that the plant equipment 4 operates to a safe side, by the signal output circuit 3.

The above signal output circuit 3 is formed by hardware such as a circuit of a relay or a discrete IC so as not to cause abnormality due to software error or the like. Therefore, in order to confirm that the function thereof is sound, a test is conducted regularly. Next, a test for confirming soundness of this circuit will be described.

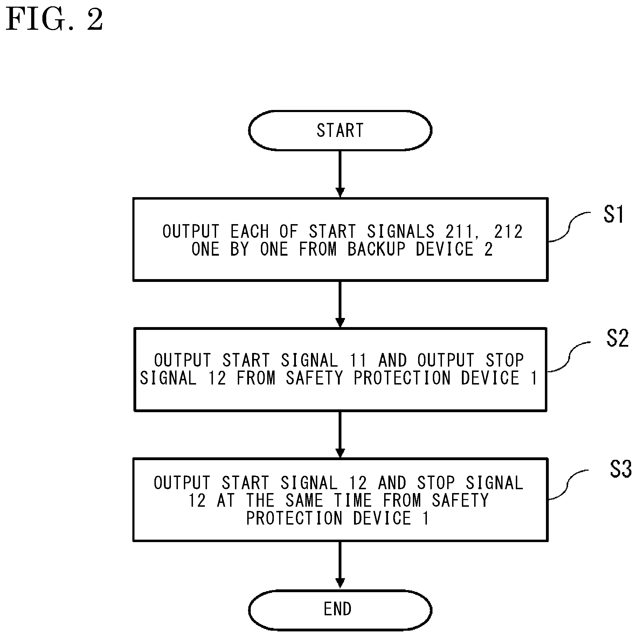

FIG. 2 is a flowchart showing a procedure of a test for confirming soundness of the signal output circuit 3 in embodiment 1.

Here, test input is performed by manual operation or a test device. The circuit configuration is provided so as to allow signal ON/OFF operation for the first start signal 211 and the second start signal 212 of the backup device and the start signal 11 and the stop signal 12 of the safety protection device 1.

An output signal B1 from the first OR circuit 301, an output signal B2 from the second OR circuit 302, an output signal A1 from the first AND circuit 311, and an output signal A2 from the second AND circuit 312, which are output signals from the logic circuits of the signal output circuit 3, are detectable from outside, and a circuit for feeding back the output signals B1, B2 to the backup device 2 and the output signals A1, A2 to the safety protection device 1 is provided.

In FIG. 2, in step S1, the first start signal 211 and the second start signal 212 from the backup device 2 are each outputted one by one for a test, to confirm transmission to the signal output circuit 3.

In a case of starting the plant equipment 4 from the backup device 2, normally, the first start signal 211 and the second start signal 212 are outputted at the same time. In a case of testing the signal output circuit 3, each signal is individually outputted. First, only the first start signal 211 is outputted (turned ON), whereby the signal is inputted through the first OR circuit 301 to the first AND circuit 311. At this time, since the output signal A1 from the first AND circuit 311 does not become ON, the plant equipment is not operated. The output signal B1 from the first OR circuit 301 is fed back to the backup device 2, whereby it can be confirmed that the signal has been transmitted to the first AND circuit 311.

Similarly, only the second start signal 212 is outputted (turned ON). This signal is inputted through the second OR circuit 302 to the first AND circuit 311. Since the output signal A1 from the first AND circuit 311 does not become ON, the plant equipment 4 is not operated. The output signal B2 from the second OR circuit 302 is fed back to the backup device 2, whereby it can be confirmed that the signal has been transmitted to the first AND circuit 311.

Next, in step S2, the start signal 11 and the stop signal 12 from the safety protection device 1 are outputted for a test, to confirm the signal output circuit 3. Also, in this step, operation of the plant equipment 4 is confirmed. In addition, signal transmission from the safety protection device 1 to the signal output circuit 3, the function of the signal output circuit 3, and signal transmission from the signal output circuit 3 to the plant equipment 4, are confirmed.

First, the start signal 11 is outputted from the safety protection device 1. The start signal 11 is inputted through the first OR circuit 301 and the second OR circuit 302 of the signal output circuit 3 to the first AND circuit 311. Since the output signals B1, B2 from both of the first OR circuit 301 and the second OR circuit 302 become ON, the first AND circuit 311 outputs a start signal to the plant equipment 4. The output signal A1 from the first AND circuit 311 is fed back to the safety protection device 1, whereby it can be confirmed that the signal has been transmitted to the plant equipment 4.

Thus, in combination with the test in step S1, soundness of the first OR circuit 301, the second OR circuit 302, and the first AND circuit 311 can be confirmed.

Subsequently, the stop signal 12 is similarly outputted from the safety protection device 1. The stop signal 12 is inputted to the second AND circuit 312 of the signal output circuit 3. Since the output signal A1 from the first AND circuit 311 is OFF, an output signal from the NOT circuit 321 becomes ON and the second AND circuit 312 outputs a stop signal to the plant equipment 4. The output signal A2 from the second AND circuit 312 is fed back to the safety protection device 1, whereby it can be confirmed that the stop signal has been transmitted to the plant equipment 4.

Thus, in combination with the test in step S1, soundness of the second AND circuit 312 can be confirmed.

Lastly, in step S3, the priority function for the start signal and the stop signal is tested. The start signal 11 and the stop signal 12 are outputted (turned ON) at the same time from the safety protection device 1. As a result, the output signals B1, B2 from all of the first OR circuit 301 and the second OR circuit 302 become ON, so that the output signal A1 from the first AND circuit 311 becomes ON, and the output signal A1 is fed back to the safety protection device 1. In addition, since the output signal A1 from the first AND circuit 311 is ON, an output signal from the NOT circuit 321 becomes OFF and the state in which the output signal A2 from the second AND circuit 312 remains OFF is fed back to the safety protection device 1.

Thus, it can be confirmed that the start signal 11 is prioritized over the stop signal 12 from the safety protection device 1 by the NOT circuit 321 and the second AND circuit 312.

As described above, according to the present embodiment, soundness of the signal output circuit 3 of the safety protection system 1000 can be tested through three steps. Among these steps, a test in which the plant equipment 4 actually undergoes start and stop operation is performed only once in step S2. With the circuit configuration and the test method as described above, it becomes possible to test soundness of the signal output circuit 3 which is a common circuit between the safety protection device 1 and the backup device 2 in the safety protection system 1000 while minimizing the number of times of operation of the plant equipment 4.

### Embodiment 2

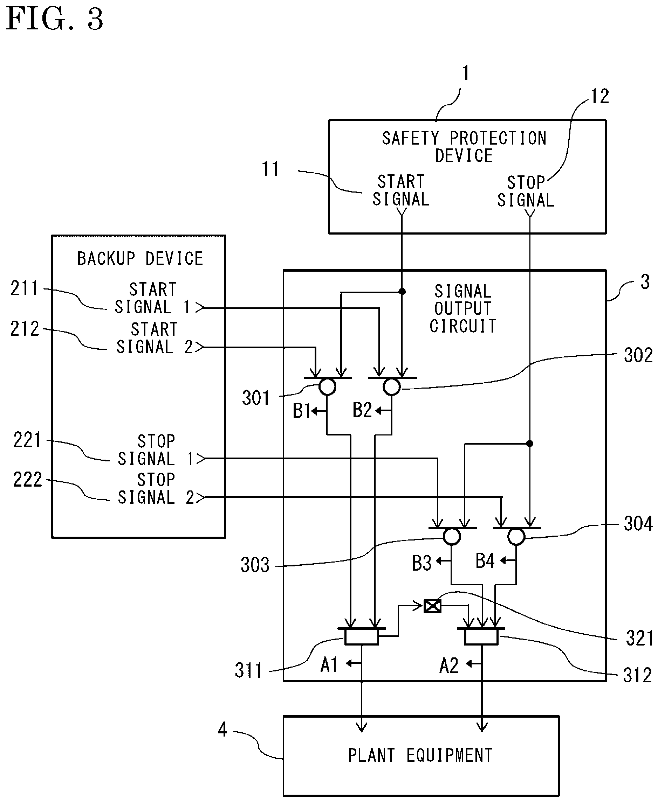

FIG. 3 shows the entirety of a safety protection system 1000 according to embodiment 2. In the safety protection system 1000 of embodiment 2, the backup device 2 is configured to be able to back up not only the start signal 11 of the safety protection device 1 but also an output of the stop signal 12. In addition, as with start signals, stop signals from the backup device 2 are outputted as a first stop signal 221 and a second stop signal 222 in a duplexed manner.

The same components as those in embodiment 1 are denoted by the same reference characters, and the detailed description thereof is omitted.

In FIG. 3, the signal output circuit 3 includes the first OR circuit 301 which receives the first start signal 211 outputted from the backup device 2 and the start signal 11 outputted from the safety protection device 1, and the second OR circuit 302 which receives the second start signal 212 outputted from the backup device 2 and the start signal 11 outputted from the safety protection device 1.

Operations regarding the start signal 11 from the safety protection device 1 and the first start signal 211 and the second start signal 212 from the backup device 2 therefor are the same as in embodiment 1 and therefore the description thereof is omitted. Next, operations regarding the stop signal 12 from the safety protection device 1 and the first stop signal 221 and the second stop signal 222 from the backup device 2 therefor will be described.

The signal output circuit 3 includes a third OR circuit 303 which receives the first stop signal 221 outputted from the backup device 2 and the stop signal 12 outputted from the safety protection device 1, and a fourth OR circuit 304 which receives the second stop signal 222 outputted from the backup device 2 and the stop signal 12 outputted from the safety protection device 1.

The output signals from the third OR circuit 303 and the fourth OR circuit 304 are inputted to the second AND circuit 312. The second AND circuit 312 receives, in addition to the signals from the third OR circuit 303 and the fourth OR circuit 304, an output signal from the NOT circuit 321 to which the output signal from the first AND circuit 311 is inputted, and an output signal from the second AND circuit 312 is transmitted as a stop signal to the plant equipment 4.

With this circuit configuration, when the stop signal 12 from the safety protection device 1 is turned ON (signal is present), an output signal is transmitted as a stop signal to the plant equipment 4. Even if the stop signal 12 from the safety protection device 1 is OFF (signal is absent), when the first stop signal 221 and the second stop signal 222 which are stop signals from the backup device 2 are both ON, an output signal is transmitted as a stop signal to the plant equipment 4.

Also, with this circuit configuration, as in embodiment 1, when the start signal to the plant equipment 4 is ON, even if the stop signal 12 from the safety protection device 1 is ON, a stop signal is not transmitted to the plant equipment 4, and output of the stop signal is performed in such a manner that prioritizes the start signal to the plant equipment 4.

With the signal output circuit 3 configured as described above, it is possible to start or stop the plant equipment 4 from both of the safety protection device 1 and the backup device 2. In addition, as in embodiment 1, in a case where the safety protection device 1 and the backup device 2 transmit different operation request signals (one of them is a stop signal and the other is a start signal), the start signal can be preferentially transmitted to the plant equipment 4.

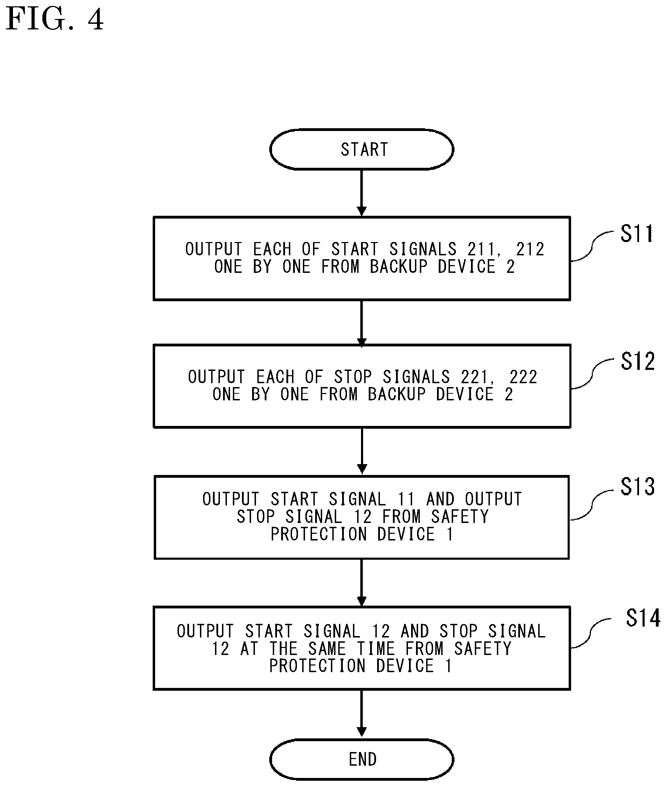

Next, a test for confirming soundness of the signal output circuit 3 in embodiment 2 will be described with reference to FIG. 4. FIG. 4 is a flowchart showing a procedure of the test for confirming soundness of the signal output circuit 3 in embodiment 2.

Here, as in embodiment 1, test input is performed by manual operation or a test device. The circuit configuration is provided so as to allow signal ON/OFF operation for the first start signal 211, the second start signal 212, the first stop signal 221, and the second stop signal 222 of the backup device and the start signal 11 and the stop signal 12 of the safety protection device 1.

The output signal B1 from the first OR circuit 301, the output signal B2 from the second OR circuit 302, an output signal B3 from the third OR circuit 303, an output signal B4 from the fourth OR circuit 304, the output signal A1 from the first AND circuit 311, and the output signal A2 from the second AND circuit 312, which are output signals from the logic circuits of the signal output circuit 3, are detectable from outside, and a circuit for feeding back the output signals B1, B2, B3, B4 to the backup device 2 and the output signals A1, A2 to the safety protection device 1 is provided.

In FIG. 4, first, in step S11, the first start signal 211 and the second start signal 212 from the backup device 2 are each outputted one by one for a test, to confirm transmission to the signal output circuit 3 (the same as in step S1). Thus, soundness of the first OR circuit 301 and the second OR circuit 302 can be confirmed.

In step S12, the first stop signal 221 and the second stop signal 222 from the backup device 2 are each outputted one by one for a test, to confirm transmission to the signal output circuit 3. In a case of testing the signal output circuit 3, each signal is individually outputted. First, the first stop signal 221 is outputted (turned ON), whereby the signal is inputted through the third OR circuit 303 to the second AND circuit 312. At this time, since the output signal A2 from the second AND circuit 312 does not become ON, the plant equipment 4 is not stopped. The output signal B3 from the third OR circuit 303 is fed back to the backup device 2, whereby it can be confirmed that the signal has been transmitted to the second AND circuit 312.

In step S13, the start signal 11 and the stop signal 12 from the safety protection device 1 are outputted for a test, to confirm the signal output circuit 3. Also, in this step, operation of the plant equipment 4 is confirmed. In addition, signal transmission from the safety protection device 1 to the signal output circuit 3, the function of the signal output circuit 3, and signal transmission from the signal output circuit 3 to the plant equipment 4, are confirmed (the same as in step S2). Through confirmation of the start signal 11, in combination with the test in step S11, soundness of the first OR circuit 301, the second OR circuit 302, and the first AND circuit 311 is confirmed.

In addition, in confirmation of the stop signal 12, the stop signal 12 is outputted from the safety protection device 1. The stop signal 12 is inputted through the third OR circuit 303 and the fourth OR circuit 304 to the second AND circuit 312. The output signals B3, B4 from both of the third OR circuit 303 and the fourth OR circuit 304 become ON, and since the output signal from the first AND circuit 311 is OFF, the output signal from the NOT circuit 321 also becomes ON. Thus, the second AND circuit 312 outputs a stop signal to the plant equipment 4. The output signal A2 from the second AND circuit 312 is fed back to the safety protection device 1, whereby it can be confirmed that the signal has been outputted to the plant equipment 4. Thus, in combination with the test in step S12, soundness of the third OR circuit 303, the fourth OR circuit 304, and the second AND circuit 312 can be confirmed.

Lastly, in step S14, the priority function for the start signal and the stop signal is tested. The start signal 11 and the stop signal 12 are outputted (turned ON) at the same time from the safety protection device 1. As a result, the output signals B1, B2 from all of the first OR circuit 301 and the second OR circuit 302 become ON, so that the output signal A1 from the first AND circuit 311 becomes ON, and the output signal A1 is fed back to the safety protection device 1. In addition, output signals from the third OR circuit 303 and the fourth OR circuit 304 also become ON, but since the output signal A1 from the first AND circuit 311 is ON, an output signal from the NOT circuit 321 becomes OFF and the state in which the output signal A2 from the second AND circuit 312 remains OFF is fed back to the safety protection device 1.

Thus, it can be confirmed that the start signal is prioritized by the NOT circuit 321 and the second AND circuit 312.

As described above, according to embodiment 2, soundness of the signal output circuit 3 of the safety protection system 1000 can be tested through four steps. Among these steps, a test in which the plant equipment 4 actually undergoes start and stop operation is performed only once in step S13. With the circuit configuration and the test method as described above, it becomes possible to test soundness of the signal output circuit 3 which is a common circuit between the safety protection device 1 and the backup device 2 in the safety protection system 1000 while minimizing the number of times of operation of the plant equipment 4.

In addition, in the safety protection system 1000 according to embodiment 2, the backup device 2 can back up not only the start signal 11 of the safety protection device 1 but also the stop signal 12. That is, the safety protection system 1000 includes the signal output circuit 3 which unifies operation request signals for both of start and stop outputted from the safety protection device 1 and the backup device 2, and can output the operation request signal to the plant equipment 4 so that the plant equipment 4 operates to a safe side, by the signal output circuit 3.

Although the disclosure is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the disclosure. It is therefore understood that numerous modifications which have not been exemplified can be devised without departing from the scope of the present disclosure. For example, at least one of the constituent components may be modified, added, or eliminated. At least one of the constituent components mentioned in at least one of the preferred embodiments may be selected and combined with the constituent components mentioned in another preferred embodiment.

### DESCRIPTION OF THE REFERENCE CHARACTERS

1 safety protection device
11 start signal
12 stop signal
2 backup device
211 first start signal
212 second start signal
221 first stop signal
222 second stop signal
3 signal output circuit
301 first OR circuit
302 second OR circuit
303 third OR circuit
304 fourth OR circuit
311 first AND circuit
312 second AND circuit
321 NOT circuit
4 plant equipment
1000 safety protection system

## Claims

1. A safety protection system comprising:
a safety protection device which outputs an operation request signal to plant equipment, for safety protection of a plant;
a backup device which backs up an output of the safety protection device when the safety protection device has failed; and
a signal output circuit which unifies the output of the safety protection device and an output of the backup device, and outputs the operation request signal to the plant equipment so that the plant equipment operates to a safe side, wherein
output signals that the backup device outputs are provided in a duplexed manner, and
the signal output circuit outputs the operation request signal only when both of the duplexed output signals of the backup device are ON, and circuit soundness is tested in a state in which the operation request signal to the plant equipment is blocked by the output signals each being turned ON one by one.

2. A safety protection system comprising:
a safety protection device which outputs a start signal and a stop signal for plant equipment by ON or OFF, for safety protection of a plant;
a backup device which backs up an output of the safety protection device when the safety protection device has failed; and
a signal output circuit which unifies the output of the safety protection device and an output of the backup device, and outputs a start signal and a stop signal to the plant equipment, wherein
start signals to be outputted from the backup device are duplexed as a first start signal and a second start signal, and
the signal output circuit includes
a first OR circuit which performs logical disjunction of the first start signal and the start signal from the safety protection device,
a second OR circuit which performs logical disjunction of the second start signal and the start signal from the safety protection device,
a first AND circuit which turns ON the start signal to be outputted to the plant equipment, when an output signal from the first OR circuit and an output signal from the second OR circuit are both ON, and
a priority circuit of a start signal prioritizing type which turns OFF the stop signal to be outputted to the plant equipment, when the start signal to be outputted to the plant equipment is ON.

3. The safety protection system according to claim 2, wherein
stop signals to be outputted from the backup device are duplexed as a first stop signal and a second stop signal, and
the signal output circuit further includes
a third OR circuit which performs logical disjunction of the first stop signal and the stop signal from the safety protection device,
a fourth OR circuit which performs logical disjunction of the second stop signal and the stop signal from the safety protection device, and
a second AND circuit which turns ON the stop signal to be outputted to the plant equipment, when an output signal from the third OR circuit and an output signal from the fourth OR circuit are both ON and an output signal from the first AND circuit is OFF.

4. The safety protection system according to claim 3, wherein
output signals from the first OR circuit, the second OR circuit, the third OR circuit, the fourth OR circuit, the first AND circuit, and the second AND circuit are detectable from outside.

5. The safety protection system according to claim 4, wherein
the start signals and the stop signals to be inputted from the safety protection device and the backup device to the signal output circuit are allowed to be turned ON/OFF by manual operation or a test device.

6. The safety protection system according to any one of claims 1 to 5, wherein
the signal output circuit is configured as a circuit of a relay or a discrete IC.

7. A test method in the safety protection system according to claim 5, comprising the steps of:
in the signal output circuit,
by manual operation, turning ON the first start signal and turning OFF the second start signal to be inputted from the backup device, to confirm that the output signal from the first OR circuit becomes ON;
by manual operation, turning OFF the first start signal and turning ON the second start signal to be inputted from the backup device, to confirm that the output signal from the second OR circuit becomes ON;
by manual operation, turning ON the first stop signal and turning OFF the second stop signal to be inputted from the backup device, to confirm that the output signal from the third OR circuit becomes ON;
by manual operation, turning OFF the first stop signal and turning ON the second stop signal to be inputted from the backup device, to confirm that the output signal from the fourth OR circuit becomes ON;
by manual operation, turning ON the start signal to be inputted from the safety protection device, to confirm that the output signal from the first AND circuit becomes ON;
by manual operation, turning ON the stop signal to be inputted from the safety protection device, to confirm that the output signal from the second AND circuit becomes ON; and
by manual operation, turning ON both of the start signal and the stop signal to be inputted from the safety protection device, to confirm that the output signal from the first AND circuit becomes ON and the output signal from the second AND circuit becomes OFF.
